# EUROPEAN PATENT SPECIFICATION

(11) **EP 4 339 018 B1**
(45) Date of publication and mention of the grant of the patent: **10.12.2025**
(21) Application number: 23218528.0
(22) Date of filing: 20.12.2023
(51) Int. Cl.: B60P 1/48, B60P 1/64

(54) **WORKING EQUIPMENT ASSEMBLY**
ARBEITSAUSRÜSTUNGSANORDNUNG
ENSEMBLE D'ÉQUIPEMENT DE TRAVAIL

(43) Date of publication of application: 20.03.2024
(73) Proprietor: Hiab AB, 215 32 Malmö (SE)
(72) Inventor: VÄHÄ-PIIKKIÖ, Ville, Rusko (FI)
(74) Representative: Bjerkén Hynell KB

(56) References cited:
- EP-A1- 4 282 707
- US-A1- 2007 264 109
- US-A1- 2015 132 091

## Description

### Technical field

The present disclosure relates to a working equipment assembly, particularly a working equipment being a hooklift, and comprising a so-called lift-frame applied to be connected to load carrying objects, e.g. ISO 668 containers.

### Background

Lift-frames applied in connection with hooklifts are disclosed in the following documents. US2023/0331135 that relates to a loading arrangement for loading and unloading load units on and off a vehicle comprises a frame to be fastened to the vehicle in a detachable manner.

EP4282707 relates to a working equipment with a lift frame assembly with alignment capabilities.

Presently applied lift-frames are mainly manually operated. One reason for this is that the routing of hoses, electricity and/or pneumatics is quite complicated to bring to the tip of the hooklift arm. Also, the lift-frame is typically detachable from the gripping hook, which also requires some kind of quick couplings to disconnect the lines to allow uses not applying the lift-frame, e.g. for loading/unloading a flatrack having an integrated bar that the hook can attach to.

One possibility could be to arrange a separate hydraulic system, or electrical system, at the lift-frame for controlling and operating the actuators and connectors of the lift-frame. However, this is not advantageous as it adds on complexity and weight to the lift-frame.

The object of the present invention is to achieve an improved working equipment, e.g. a hooklift, to be connected to a lift-frame, without having to manually connect and disconnect connection lines to the lift-frame when the lift-frame is to be used, and where no separate hydraulic or electrical system is required to be installed at the lift-frame.

### Summary

The above-mentioned objects are achieved by the present invention according to the independent claim.

Preferred embodiments are set forth in the dependent claims.

According to the invention, the connection lines including e.g. hydraulic, pneumatic and/or electrical lines, are connected to the lift-frame all the time, both during operations in a lift-frame mode when the lift-frame is attached to the hooklift arm, and operations in an attachment member mode when the lift-frame not is attached to the hooklift arm, but instead is stowed at the vehicle. A lift-frame connection arrangement is provided, comprising the connection lines, adapted to connect control and operating systems of the working equipment, i.e. the hooklift equipment, to the lift-frame, and an elongated rigid structure configured to guide, protect and at least partly enclose the connection lines over a predetermined length. The rigid structure is pivotably attached to the vehicle by a connection joint at a connection attachment position. The elongated rigid structure is arranged to follow the movement of the movable arm, when the working equipment is operated in the lift-frame mode, and structured to stow at least a part of the connection lines along the longitudinal axis A of the vehicle when the working equipment is operated in the attachment member mode.

By applying the present invention, there is no need to use any connectors or couplings that need to be manually attached and deattached to the lift-frame depending on the operating mode of the working equipment. The connection lines are prevented from interfering with the lift-frame and getting entangled in the working equipment and/or vehicle when the lift-frame is used, and remain stowed outside the movement range of the hooklift, when the lift-frame not is used.

Because the connection lines are connected to the lift-frame all the time, new functions may be provided on the lift-frame.

### Brief description of the drawings

Figure 1 is a schematic side view of a vehicle provided with a working equipment assembly as disclosed herein in a lift-frame mode but without any container loaded to the load bed of the vehicle.
Figure 2 is a schematic view from above of a vehicle provided with a working equipment assembly as disclosed herein in a lift-frame mode.
Figures 3-6 are schematic side views of a vehicle provided with a working equipment assembly as disclosed herein in a lift-frame mode, during various parts of a loading procedure.
Figure 7 is a schematic side view of a vehicle provided with a working equipment assembly as disclosed herein in an attachment member mode.

### Detailed description

The working equipment assembly will now be described in detail with references to the appended figures. Throughout the figures the same, or similar, items have the same reference signs. Moreover, the items and the figures are not necessarily to scale, emphasis instead being placed upon illustrating the principles of the invention.

With references to the figures, a working equipment assembly 2 is provided, arranged to be mounted to a vehicle 4, e.g. a loader vehicle, such as a truck for transporting ISO containers and flat racks, or other load carrying objects.

The working equipment assembly 2 comprises a working equipment 6 comprising a hooklift that in turn comprises a movable arm 8 for loading and unloading a load carrying object 10, such as a container, or a flat-rack container, to/from the vehicle 4.

The movable arm 8 has a first end pivotably mounted to the vehicle at an arm attachment position 12, and a second end provided with an attachment member 14, e.g. a hook, arranged to connect the movable arm 8 to the load carrying object 10 during the loading or unloading, when the working equipment 6 is operated in an attachment member mode.

The attachment member 14 is also arranged to connect the movable arm 8 to a lift-frame 16. The lift-frame, being part of the working equipment assembly 2, comprising an attachment part 18, such as a bar, arranged to be attached to the attachment member 14, e.g. the hook, and a set of connectors arranged to connect the lift-frame 16 to the load carrying object 10 during loading and unloading. The working equipment 6 is operated in a lift-frame mode, when the attachment member 14 is attached to the lift-frame 16. It is particularly advantageous to apply a lift-frame during loading and unloading of ISO 668 containers. ISO 668 containers belong to a series of freight containers having standardized dimensions and having a standard that regulates both external and internal dimensions of containers, as well as the minimum door opening sizes, where applicable. A lift-frame 16 disclosed herein is provided with a set of connectors adapted to attach the lift-frame to standardized openings provided e.g. at the edges of the container, thereby achieving a controlled loading and unloading procedure of the container to and from the vehicle. There are further other alternative lift-frames used for loading and unloading other types of load carrying objects. One alternative example may be a lift-frame for loading and unloading bridge adapter pallets that are used to build bridges and in use in defence and/or rescue applications. In this particular lift-frame for bridge transports a hydraulic winch is commonly used as a connector on the lift-frame to connect to the bridge adapter pallet to be loaded or unloaded.

The working equipment assembly 2 further comprises a lift-frame connection arrangement 20 comprising connection lines 22, e.g. hydraulic lines, pneumatic lines, or electrical lines, adapted to connect control and operating systems of the working equipment 6 to the lift-frame 16. The connection lines comprise necessary lines for controlling the various functions of the lift-frame, e.g. for controlling the set of connectors, which may be hydraulically controlled via hydraulic lines. In addition, various sensors may be provided at the lift-frame which require electrical power, and electrical communication of e.g. measurement values.

The lift-frame connection arrangement 20 further comprises an elongated rigid structure 24 configured to guide, protect and at least partly enclose the connection lines 22 over a predetermined length. In one embodiment the elongated rigid structure 24 is arranged to be integrated with the connection lines 22 as one or more pipe or tube of predetermined length that is then connected to at least one flexible hose or cable for further connection to the lift-frame. The rigid structure 24 is pivotably attached to the vehicle 4 by a connection joint 26 at a connection attachment position 28. Preferably, the rigid structure is pivotable about an axis perpendicular to a longitudinal axis A of the vehicle.

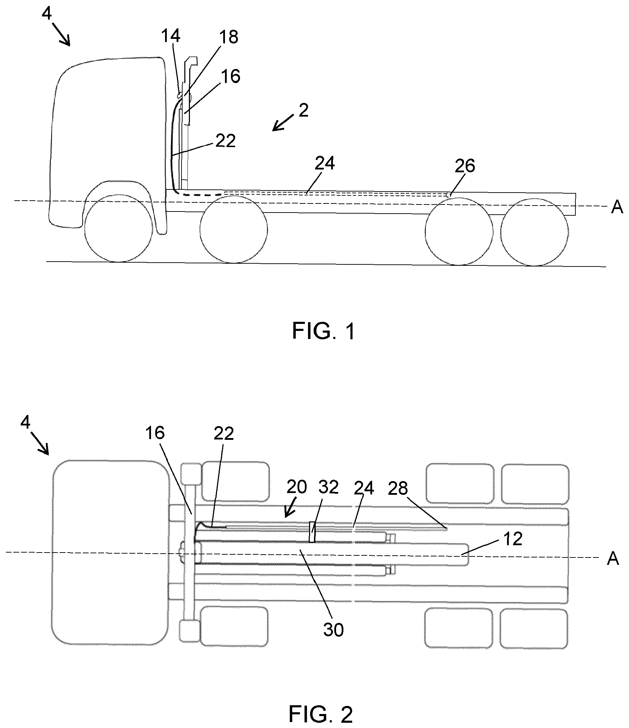

The connection attachment position 28 is close to, and within a predetermined distance from, the arm attachment position 12, so that the elongated rigid structure 24 is arranged to follow the movement of the movable arm 8, when the working equipment 6 is operated in the lift-frame mode. Figures 1-6 illustrate the working equipment operated in the lift-frame mode.

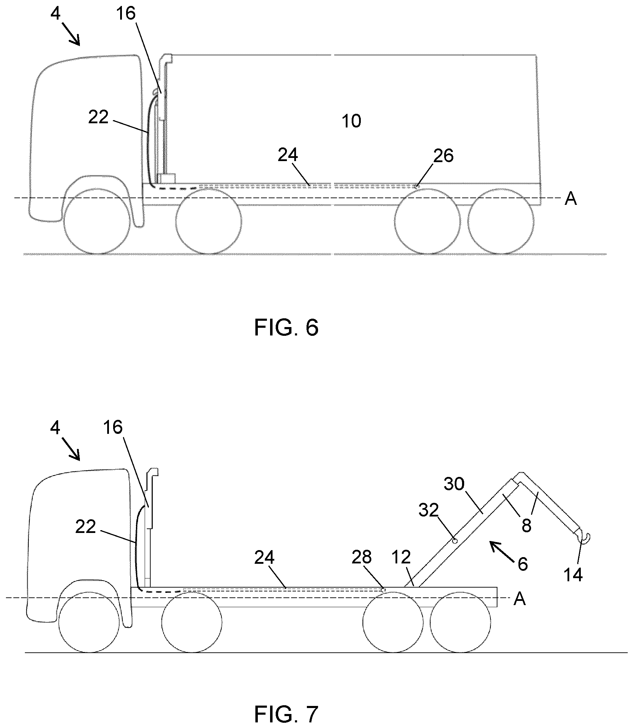

The elongated rigid structure 24 is furthermore structured to stow at least a part of the connection lines 22 along the longitudinal axis A of the vehicle 4 when the working equipment 6 is operated in the attachment member mode. It may hence stow at least a part of the connection lines 22 along the longitudinal axis A of the vehicle 4, preferably from the connection attachment position 28 to the lift-frame 16 when the working equipment 6 is operated in the attachment member mode. Figure 7 illustrates the working equipment operated in the attachment member mode.

In a further variation, when using an alternative lift-frame for bridge adapter pallets, the lift-frame may be completely unloaded when in the attachment member mode. However, the connection lines will then still be stowed along the longitudinal axis of the vehicle to a connection point behind the cab of the vehicle.

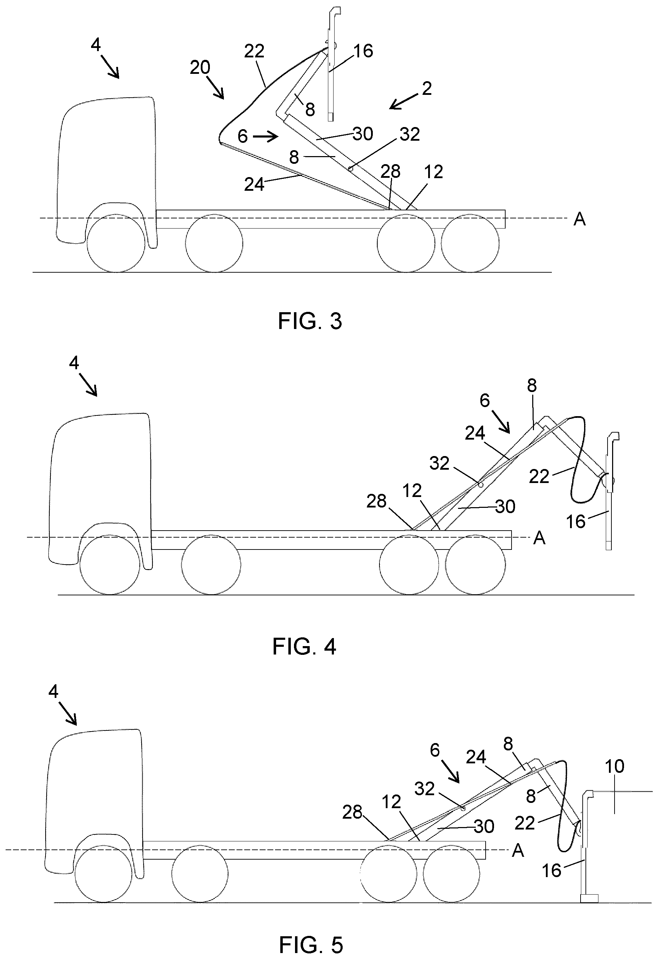

In one embodiment of the working equipment assembly 2, the lift-frame connection arrangement 20 is pivotable from a position where it is oriented in a forward direction of the vehicle 4 along the longitudinal axis A of the vehicle 4 (see e.g. figures 1 and 2), to a position where it is oriented essentially along a middle frame 30 of the movable arm 8, and inclined in a backward direction of the vehicle 4 (see figures 4 and 5).

The lift-frame connection arrangement 20 may be pivotable in a virtual vertical plane being essentially parallel to a virtual movement plane of the movable arm, provided that the vehicle 4 is operated on a horizontally oriented ground. In an alternative embodiment the lift-frame connection arrangement 20 is pivotable in a virtual vertical plane being arranged at an angle (e.g. in the range of 1-10 degrees) to a virtual movement plane of the movable arm, this would enable the lift-frame connection arrangement 20 to move further away from the center of the lift-frame 16 when it is in a rearward direction, to further avoid risk of collisions between the connection lines and part of the working equipment and vehicle.

In figure 1, the attachment member 14, being a hook in the illustrated example, is attached to the attachment part 18 of the lift-frame 16. The attachment part 18 may be a horizontal bar.

According to an embodiment, the predetermined distance between the connection attachment position 28 of the lift-frame connection arrangement 20, and the arm attachment position 12 of the movable arm 8 is less than 1 meter, and preferably less than 0.5 meter, or in an even more preferred embodiment, less than 25 cm. The connection attachment position 28 of the lift-frame connection arrangement 20 is located essentially at the same longitudinal position as, or in front of, the arm attachment position 12 of the movable arm 8, along, or parallel to, the longitudinal axis A of the vehicle 4.

According to a further embodiment, the working equipment assembly 2 comprises at least one movement restriction member 32 structured to prevent the rigid structure 24 of the lift-frame connection arrangement 20 of passing by a middle frame 30 of the movable arm 8 in a backward direction of the vehicle 4 along the longitudinal axis A of the vehicle 4 during movement of the movable arm 8 when the hooklift is operated in the lift-frame mode, thus preventing interference with said lift-frame 16 attached to the attachment member 14, i.e. the hook, and/or the vehicle, and/or parts of the working equipment. This embodiment is clearly illustrated in figures 4 and 5, where the movement restriction member 32 prevents the rigid structure 24 passing by the middle frame, and thus preventing the connection lines, e.g. from falling down against the vehicle, and from being too close to movable parts of the lift-frame, where there is a risk of compromising the loading/unloading procedure.

According to a further embodiment the pivoting axles of the movable arm 8 at arm attachment position 12 and the elongated rigid structure 24 connection attachment position 28 are arranged in line, or essentially in line, with each other, enabling the movement restriction member to clamp and/or attach to the elongated rigid structure 24 when in lift-frame mode and detach from the elongated rigid structure 24 when in attachment member mode.

The movement restriction member 32 may in this case comprise an additional actuator to attach and detach the elongated rigid structure 24 in dependence of the mode being active. In a further embodiment, the movement restriction member 32 is at least one bar and/or roller, and/or steel structure, and/or plate, mounted on the rigid structure 24 of the lift-frame connection arrangement 20, and/or at the middle frame 30 of the movable arm 8, which is illustrated by the figures.

According to another embodiment, the rigid structure 24 is a tube, a hollow beam, or another type of enclosure capable of receiving, enclosing, and protecting the connection lines arranged within the rigid structure 24.

The rigid structure 24 may in an alternative embodiment comprise a bundle of pipes or tubes that further serves as connection lines and that are clamped or packaged together, and hence forming the rigid structure. Flexible hoses and/or cables may further be attached and connected to the bundle of pipes to complete the connection of the connection lines to the lift-frame.

Preferably, the rigid structure is made from a steel-structure, and/or a light-weight material, e.g. aluminium, or any alloy, plastic, carbon fibre materials, etc. The rigid structure may e.g. comprise a pattern, e.g. of holes, to reduce the weight of the structure.

The predetermined length of the rigid structure 24 may be related to the length of a middle frame 30 of the movable arm 8 such that the lengths do not differ more than 20%. The predetermined length of the rigid structure 24 may further be related to the geometry of the working equipment such as the relation between a stowed position of the lift-frame, a horizontal movement of the tip of the movable arm and/or the length of the middle beam 30.

In still another embodiment, the lift-frame 16, when not in use loading or unloading operation, is structured to be stored at the vehicle 4, behind a cabin of the vehicle 4, and in front of the movable arm 8. This is illustrated in figures 2 and 7; figure 2 shows the lift-frame attached to the hooklift arm in the stored position, and figure 7 shows the lift-frame in the stored position while operating the working equipment in attachment member mode. In one alternative embodiment the lift-frame 16 may be unloaded from the vehicle and working equipment when not in use for loading or unloading operation with the lift-frame 16. The lift-frame 16 is then parked at a position on the ground or a separate arrangement stationary on the ground. In such an embodiment the connection lines 22 are first disconnected from the lift-frame 16 in the stowed position for attachment member mode. The lift-frame connection arrangement 20 may hence enable safe operation of the working equipment in attachment member mode even if the lift-frame is disconnected and parked away from the vehicle.

The operating procedures of the working equipment assembly will now be described with references to the figures.

In the side view of the vehicle, shown in figure 1, the working equipment is in a lift-frame mode, where the hooklift is attached to the lift-frame 16. The lift-frame is stowed behind the cabin of the vehicle. The connection lines 22 are connected to the lift-frame, and the rigid structure 24 is stowed in a forward direction, parallel to the longitudinal axis A of the vehicle.

Figure 2 shows a view from above of the vehicle shown in figure 1. In particular, the movement restriction member 32 is shown, and also two hydraulic cylinders located on each side of the middle beam 30 of the moveable arm. These hydraulic cylinders are used to apply movement to the movable arm.

In figure 2 is shown an embodiment of the invention where the rigid structure 24 is arranged parallel to the middle beam 30, and to the outer side of one of the two hydraulic cylinders for the moveable arm. In alternative embodiments the rigid structure 24 may be arranged at an angle to the longitudinal axis A of the vehicle, to allow for the rigid structure to slightly point away from the center when the lift-frame is at its rear position for loading or unloading. This embodiment may further reduce the risk of the connection lines colliding with other parts of the working equipment assembly. In further alternative embodiments the rigid structure 24 may be arranged under the middle beam 30. And in yet another embodiment the rigid structure 24 may be arranged at the outer side of a chassis of the vehicle, or a sub frame of the working equipment, assembly. In this embodiment an actuator or spring element may be arranged at the connection attachment position 28 to further support the movement of the rigid structure 24. An actuator or spring element may further be arranged at the connection attachment position 28 to support the movement of the rigid structure 24 in any of the other embodiments.

In the side view shown in figure 3, the moveable arm 8 has been moved approximately 45 degrees from its original position by movement forces applied to the movable arm by the hydraulic cylinders (not shown in figure 3). The connection lines, being flexible from the attachment point to the lift-frame to the end of the rigid structure 24, will lift the rigid structure 24 such that it follows the movement of the movable arm.

In figure 4, the movable arm 8 has reached a position of approximately 135 degrees from its original position. In particular, when moving past 90 degrees, i.e. when the middle frame 30 is directed upwards, the rigid structure 24 will follow the movement and be restricted by the movement restriction member 32 from passing by the movable arm 8 to a position where the connection lines 22 will interfere with the lift-frame 16.

In figure 5, the lift-frame has been attached to a container 10 by means of the set of connectors provided at the lift-frame, and in figure 6 the container has been loaded onto the vehicle, and the rigid structure 24 has also been moved to its stowed position.

In figure 7, the hooklift is instead used in the attachment member mode, where the hook may be directly applied for lifting e.g. a container. In this mode, i.e. the hooklift is not attached to the lift-frame, the lift-frame is stowed behind the cabin, and the connection lines 22 are attached to the lift-frame.

## Claims

1. A working equipment assembly (2) arranged to be mounted to a vehicle (4), the working equipment (6) comprises a hooklift comprising a movable arm (8) for loading and unloading a load carrying object (10), such as a container, to/from the vehicle (4), the movable arm (8) has a first end pivotably mounted to said vehicle at an arm attachment position (12) and a second end provided with an attachment member (14), e.g. a hook, arranged to connect the movable arm (8) to the load carrying object (10) during the loading or unloading wherein said working equipment (6) is operated in an attachment member mode, or to a lift-frame (16), wherein the lift-frame, being part of said working equipment assembly (2), comprising an attachment part (18) arranged to be attached to said attachment member (14), and a set of connectors arranged to connect the lift-frame (16) to the load carrying object (10) during loading and unloading, and wherein said working equipment (6) is operated in a lift-frame mode, when said attachment member (14) is attached to said lift-frame (16) wherein the working equipment assembly (2) further comprises a lift-frame connection arrangement (20) comprising connection lines (22), e.g. hydraulic lines, pneumatic lines, or electrical lines, adapted to connect control and operating systems of the working equipment (6) to the lift-frame (16), and an elongated rigid structure (24) configured to guide, protect and at least partly enclose said connection lines (22) over a predetermined length, wherein the rigid structure (24) is pivotably attached to the vehicle (4) by a connection joint (26) at a connection attachment position (28), and said connection attachment position (28) is close to, and within a predetermined distance from, said arm attachment position (12), so that the elongated rigid structure (24) is arranged to follow the movement of the movable arm (8), when the working equipment (6) is operated in the lift-frame mode, **characterized in that**
the elongated rigid structure (24) is structured to stow at least a part of the connection lines (22) along a longitudinal axis A of the vehicle (4) when the working equipment (6) is operated in the attachment member mode.

2. The working equipment assembly (2) according to claim 1, wherein said lift-frame connection arrangement (20) is pivotable about an axis perpendicular to the longitudinal axis A of the vehicle.

3. The working equipment assembly (2) according to claim 1 or 2, wherein said lift-frame connection arrangement (20) is pivotable from a position where it is oriented in a forward direction of the vehicle (4) along said longitudinal axis A of the vehicle (4), to a position where it is oriented essentially along a middle frame (30) of said movable arm (8), and inclined in a backward direction of the vehicle (4).

4. The working equipment assembly (2) according to any of claims 1-3, wherein said predetermined distance is 1 meter, and more preferred 0.5 meter, and most preferred 0.25 meter, and that said connection attachment position (28) of the lift-frame connection arrangement (20) is located essentially at the same longitudinal position as, or in front of, said arm attachment position (12) of the movable arm (8), along said longitudinal axis A of the vehicle (4).

5. The working equipment assembly (2) according to any of claims 1-4, comprising a movement restriction member (32) structured to prevent the rigid structure (24) of said lift-frame connection arrangement (20) of passing by a middle frame (30) of the movable arm (8) in a backward direction of said vehicle (4) along the longitudinal axis A of the vehicle (4) during movement of the movable arm (8) when said hooklift is operated in the lift-frame mode, thus preventing interference with said lift-frame (16) attached to said attachment member (14), i.e. the hook.

6. The working equipment assembly (2) according to claim 5, wherein said movement restriction member (32) is at least one bar, and/or roller, and/or steel structure, and/or plate, mounted on said rigid structure (24) of the lift-frame connection arrangement (20), and/or at said middle frame (30) of the movable arm (8).

7. The working equipment assembly (2) according to any of claims 1-6, wherein the rigid structure (24) is a tube, or a hollow beam, made from a light-weight material.

8. The working equipment assembly (2) according to any of claims 1-7, wherein said lift-frame (16), when not in use, is structured to be stored at the vehicle (4), behind a cabin of the vehicle (4), and in front of said movable arm (8).

## Patentansprüche

1. Arbeitsausrüstungsbaugruppe (2), die dafür angeordnet ist, an einem Fahrzeug (4) montiert zu werden, wobei die Arbeitsausrüstung (6) einen Hakenlift umfasst, der einen beweglichen Arm (8) zum Laden und Entladen eines lasttragenden Objekts (10), beispielsweise eines Containers, auf das/von dem Fahrzeug (4) umfasst, wobei der bewegliche Arm (8) ein erstes Ende hat, das an einer Armbefestigungsposition (12) schwenkbar an dem Fahrzeug montiert ist, und ein zweites Ende, das mit einem Befestigungselement (14), z. B. einem Haken, versehen ist, das dafür angeordnet ist, den beweglichen Arm (8) mit dem lasttragenden Objekt (10) während des Ladens oder Entladens zu verbinden, wobei die Arbeitsausrüstung (6) in einem Befestigungselementmodus betrieben wird, oder mit einem Hubrahmen (16), wobei der Hubrahmen, der Teil der Arbeitsausrüstungsbaugruppe (2) ist, einen Befestigungsteil (18) aufweist, der dafür angeordnet ist, an dem Befestigungselement (14) befestigt zu werden, und einen Satz von Verbindern, die dafür angeordnet sind, den Hubrahmen (16) während des Ladens und Entladens mit dem lasttragenden Objekt (10) zu verbinden, und wobei die Arbeitsausrüstung (6) in einem Hubrahmenmodus betrieben wird, wenn das Befestigungselement (14) an dem Hubrahmen (16) befestigt ist, wobei die Arbeitsausrüstungsbaugruppe (2) ferner eine Hubrahmen-Verbindungsanordnung (20) aufweist, die Verbindungsleitungen (22), z. B. Hydraulikleitungen, Pneumatikleitungen oder elektrische Leitungen, umfasst, die dafür eingerichtet sind, Steuer- und Betriebssysteme der Arbeitsausrüstung (6) mit dem Hubrahmen (16) zu verbinden, und eine längliche starre Struktur (24), die dafür ausgelegt ist, die Verbindungsleitungen (22) über eine vorbestimmte Länge zu führen, zu schützen und zumindest teilweise zu umschließen, wobei die starre Struktur (24) durch ein Verbindungsgelenk (26) an einer Verbindungsbefestigungsposition (28) schwenkbar an dem Fahrzeug (4) befestigt ist, und wobei die Verbindungsbefestigungsposition (28) nahe und innerhalb eines vorbestimmten Abstands von der Armbefestigungsposition (12) liegt, sodass die längliche starre Struktur (24) so angeordnet ist, dass sie der Bewegung des beweglichen Arms (8) folgt, wenn die Arbeitsausrüstung (6) im Hubrahmenmodus betrieben wird,
**dadurch gekennzeichnet, dass** die längliche starre Struktur (24) so aufgebaut ist, dass sie mindestens einen Teil der Verbindungsleitungen (22) entlang einer Längsachse A des Fahrzeugs (4) verstaut, wenn die Arbeitsausrüstung (6) im Befestigungselementmodus betrieben wird.

2. Arbeitsausrüstungsbaugruppe (2) nach Anspruch 1, wobei die Hubrahmen-Verbindungsanordnung (20) um eine Achse senkrecht zur Längsachse A des Fahrzeugs schwenkbar ist.

3. Arbeitsausrüstungsbaugruppe (2) nach Anspruch 1 oder 2, wobei die Hubrahmen-Verbindungsanordnung (20) aus einer Position, in der sie in einer Vorwärtsrichtung des Fahrzeugs (4) entlang der Längsachse A des Fahrzeugs (4) ausgerichtet ist, in eine Position schwenkbar ist, in der sie im Wesentlichen entlang eines Mittelrahmens (30) des beweglichen Arms (8) ausgerichtet ist und in einer Rückwärtsrichtung des Fahrzeugs (4) geneigt ist.

4. Arbeitsausrüstungsbaugruppe (2) nach einem der Ansprüche 1 bis 3, wobei der vorbestimmte Abstand 1 Meter und stärker bevorzugt 0,5 Meter und am stärksten bevorzugt 0,25 Meter beträgt und wobei sich die Verbindungsbefestigungsposition (28) der Hubrahmen-Verbindungsanordnung (20) im Wesentlichen an der gleichen Längsposition wie die oder vor der Armbefestigungsposition (12) des beweglichen Arms (8) entlang der Längsachse A des Fahrzeugs (4) befindet.

5. Arbeitsausrüstungsbaugruppe (2) nach einem der Ansprüche 1 bis 4, umfassend ein Bewegungsbegrenzungselement (32), das so aufgebaut ist, dass es die starre Struktur (24) der Hubrahmen-Verbindungsanordnung (20) daran hindert, während der Bewegung des beweglichen Arms (8) in einer Rückwärtsrichtung des Fahrzeugs (4) entlang der Längsachse A des Fahrzeugs (4) an einem Mittelrahmen (30) des beweglichen Arms (8) vorbeizukommen, wenn der Hakenlift im Hubrahmenmodus betrieben wird, wodurch eine Interferenz mit dem Hubrahmen (16), der an dem Befestigungselement (14), d. h. dem Haken, befestigt ist, verhindert wird.

6. Arbeitsausrüstungsbaugruppe (2) nach Anspruch 5, wobei das Bewegungsbegrenzungselement (32) mindestens eine Stange und/oder Rolle und/oder Stahlkonstruktion und/oder Platte ist, die an der starren Struktur (24) der Hubrahmen-Verbindungsanordnung (20) und/oder am Mittelrahmen (30) des beweglichen Arms (8) montiert ist.

7. Arbeitsausrüstungsbaugruppe (2) nach einem der Ansprüche 1 bis 6, wobei die starre Struktur (24) ein Rohr oder ein Hohlbalken aus einem leichten Material ist.

8. Arbeitsausrüstungsbaugruppe (2) nach einem der Ansprüche 1 bis 7, wobei der Hubrahmen (16) bei Nichtgebrauch so aufgebaut ist, dass er am Fahrzeug (4) hinter einer Kabine des Fahrzeugs (4) und vor dem beweglichen Arm (8) verstaut werden kann.

## Revendications

1. Ensemble d'équipement de chantier (2) agencé pour être monté sur un véhicule (4), l'équipement de chantier (6) comprend un système de levage à crochet comprenant un bras mobile (8) pour charger et décharger un objet porteur de charge (10), tel qu'un conteneur, vers/depuis le véhicule (4), le bras mobile (8) a une première extrémité montée de manière pivotante sur ledit véhicule au niveau d'une position de fixation de bras (12) et une deuxième extrémité munie d'un élément de fixation (14), par exemple un crochet, agencé pour raccorder le bras mobile (8) à l'objet porteur de charge (10) pendant le chargement ou le déchargement, dans lequel ledit équipement de chantier (6) est mis en fonctionnement dans un mode d'élément de fixation, ou à un cadre de levage (16), dans lequel le cadre de levage, faisant partie dudit ensemble d'équipement de chantier (2), comprenant une partie de fixation (18) agencée pour être fixée audit élément de fixation (14), et un ensemble de raccords agencés pour raccorder le cadre de levage (16) à l'objet porteur de charge (10) pendant le chargement et le déchargement, et dans lequel ledit équipement de chantier (6) est mis en fonctionnement dans un mode de cadre de levage, lorsque ledit élément de fixation (14) est fixé audit cadre de levage (16), dans lequel l'ensemble d'équipement de chantier (2) comprend en outre un agencement de raccordement de cadre de levage (20) comprenant des lignes de raccordement (22), par exemple, des lignes hydrauliques, lignes pneumatiques ou des lignes électriques, adapté pour raccorder les systèmes de commande et d'exploitation de l'équipement de chantier (6) au cadre de levage (16), et une structure rigide allongée (24) configurée pour guider, protéger et enfermer au moins partiellement lesdites lignes de raccordement (22) sur une longueur prédéterminée, dans lequel la structure rigide (24) est fixée de manière pivotante au véhicule (4) par une articulation de raccordement (26) au niveau d'une position de fixation de raccordement (28), et ladite position de fixation de raccordement (28) est proche de, et à moins d'une distance prédéterminée de, ladite position de fixation de bras (12), de sorte que la structure rigide allongée (24) est agencée pour suivre le mouvement du bras mobile (8), lorsque l'équipement de chantier (6) est mis en fonctionnement dans le mode de cadre de levage, **caractérisé en ce que** la structure rigide allongée (24) est structurée pour ranger au moins une partie des lignes de raccordement (22) le long d'un axe longitudinal A du véhicule (4) lorsque l'équipement de chantier (6) est mis en fonctionnement dans le mode d'élément de fixation.

2. Ensemble d'équipement de chantier (2) selon la revendication 1, dans lequel ledit agencement de raccordement de cadre de levage (20) peut pivoter autour d'un axe perpendiculaire à l'axe longitudinal A du véhicule.

3. Ensemble d'équipement de chantier (2) selon la revendication 1 ou 2, dans lequel ledit agencement de raccordement de cadre de levage (20) peut pivoter d'une position où il est orienté dans une direction avant du véhicule (4) le long dudit axe longitudinal A du véhicule (4) à une position où il est orienté essentiellement le long d'un cadre médian (30) dudit bras mobile (8), et incliné dans une direction arrière du véhicule (4).

4. Ensemble d'équipement de chantier (2) selon l'une quelconque des revendications 1 à 3,
dans lequel ladite distance prédéterminée est de 1 mètre, et de manière davantage préférée de 0,5 mètre, et de manière préférée entre toutes de 0,25 mètre, et ladite position de fixation de raccordement (28) de l'agencement de raccordement de cadre de levage (20) est située essentiellement à la même position longitudinale que, ou devant, ladite position de fixation de bras (12) du bras mobile (8), le long dudit axe longitudinal A du véhicule (4).

5. Ensemble d'équipement de chantier (2) selon l'une quelconque des revendications 1 à 4,
comprenant un élément de restriction de mouvement (32) structuré pour empêcher la structure rigide (24) dudit agencement de raccordement de cadre de levage (20) de passer par un cadre intermédiaire (30) du bras mobile (8) dans une direction arrière dudit véhicule (4) le long de l'axe longitudinal A du véhicule (4) pendant le mouvement du bras mobile (8) lorsque ledit système de levage à crochet est mis en fonctionnement dans le mode de cadre de levage, empêchant ainsi une interférence avec ledit cadre de levage (16) fixé audit élément de fixation (14), c'est-à-dire le crochet.

6. Ensemble d'équipement de chantier (2) selon la revendication 5, dans lequel ledit élément de restriction de mouvement (32) est au moins une barre, et/ou un rouleau, et/ou une structure en acier, et/ou une plaque, monté(e) sur ladite structure rigide (24) de l'agencement de raccordement de cadre de levage (20), et/ou au niveau dudit cadre médian (30) du bras mobile (8).

7. Ensemble d'équipement de chantier (2) selon l'une quelconque des revendications 1 à 6,
dans lequel la structure rigide (24) est un tube, ou une poutre creuse, composés d'un matériau léger.

8. Ensemble d'équipement de chantier (2) selon l'une quelconque des revendications 1 à 7,
dans lequel ledit cadre de levage (16), lorsqu'il n'est pas utilisé, est structuré pour être stocké au niveau du véhicule (4), derrière une cabine du véhicule (4), et devant ledit bras mobile (8) .
